# NEW EUROPEAN PATENT SPECIFICATION

(11) **EP 2 010 385 B2**
(45) Date of publication and mention of the opposition decision: **16.01.2019**
(45) Mention of the grant of the patent: 19.08.2009
(21) Application number: 07733624.6
(22) Date of filing: 20.04.2007
(51) Int. Cl.: B32B 17/10, C03C 27/12, B60Q 3/208

(54) **LAMINATED GLAZING**
VERBUNDVERGLASUNG
VITRAGE FEUILLETE

(30) Priority: 20.04.2006 GB 0607743
(43) Date of publication of application: 07.01.2009
(73) Proprietor: Pilkington Group Limited, Nr. Ormskirk Lancashire L40 5UF (GB)
(72) Inventor: DAY, Stephen Roland, Greater Manchester WN6 0TB (GB); BARTON, Neil, St Helens Merseyside WA10 6BJ (GB)
(74) Representative: Pettet, Nicholas Edward
(86) International application number: PCT/GB2007/050202
(87) International publication number: WO 2007/122426

(56) References cited:
- EP-A- 1 365 458
- WO-A2-2005/102688
- JP-U- H0 393 124
- US-A- 4 338 000
- US-A- 4 645 970
- US-A- 5 208 080
- US-A- 5 239 406
- US-A- 5 336 965
- US-A- 6 055 088
- US-A1- 2005 001 456
- US-A1- 2005 238 857

## Description

The present invention relates to a laminated glazing, in particular to a laminated glazing for use as an automotive window, for example as a windshield, a backlight, a sidelight or a rooflight in a vehicle.

It is known to provide an automotive window with an electrical device (i.e. a device that requires electrical energy to perform its function), especially a device that is able to provide a lighting function (such as courtesy or ambient lighting) to the interior of a vehicle into which the window may be fitted. WO 02/098179 provides one example of such a window. It discloses a laminated glass pane which may be used as a rooflight and which includes a multilayer electroluminescent lighting element within the laminate. When an electric voltage is applied to the lighting element, it radiates light through at least one surface of the glass pane.

A laminated glazing which incorporates an electrical device, especially in the form of an electroluminescent lamp (also known in the art as an organic light emitting diode ("OLED") device/lamp/element), is a desirable product for inclusion in a vehicle because an electroluminescent device typically has a longer operational lifetime than a conventional incandescent bulb, which is often the light source that is otherwise used for interior lighting applications. Additionally the light provided by an electroluminescent device is often more diffuse than that from an incandescent bulb, and so a more aesthetically pleasing lighting effect may be achieved.

A laminated glazing having variable light transmission properties due to inclusion of a liquid crystal film device ("LCD") or a suspended particle device ("SPD") is also a desirable product because of the passenger comfort benefits it is able to afford once fitted in a vehicle.

Unfortunately it appears that many electroluminescent materials, LCDs and SPDs are sensitive to both temperature and humidity to such an extent that the performance of each may be adversely affected depending on the nature of its local environment. For example, the half-life of an electroluminescent lamp (i.e. the time taken for the intensity of light emitted by the OLED to drop to fifty percent of its initial value) may be significantly reduced if the lamp is subjected to elevated temperature and/or increased humidity, as compared to ambient conditions.

By laminating an electrical device it has been observed that the humidity sensitivity may be greatly reduced, probably because the device is effectively in a sealed environment. However the problem of temperature sensitivity appears to remain. It would therefore be desirable to provide a laminated glazing which incorporates an electrical device, especially an electroluminescent device, an LCD or an SPD, which is able to withstand elevated temperature such that, for example a reduction in the half-life of the electroluminescent device is minimised, and maybe even prevented.

Accordingly, the present invention provides a laminated glazing according to claim 1.

The electrical device is a suspended particle device.

The laminated glazing comprises a second ply of interlayer material and the electrical device is located between the first and second plies of interlayer material. Such a configuration may be useful for ensuring that there is good adhesion between the electrical device and the panes of glazing material subsequent to lamination of the glazing.

In some circumstances it may be desirable for a vehicle glazing to be body-tinted (subject to national/regional legal requirements regarding minimum visible light transmission for windshields and front door sidelights, as is known in the art). This may be achieved by making one or more of the plies of interlayer material body-tinted (the interlayer material otherwise being clear).

The laminating interlayer material is typically provided in a thickness of between 0.38 and 1.1 mm, but most commonly 0.76 mm. Furthermore the interlayer material may have infrared reflecting properties and/or sound insulation properties (commonly known as an "acoustic interlayer" material).

The laminated glazing further comprises a third ply of interlayer material between the first and second plies of interlayer material, whereby the electrical device is located in a cut-out region in the third ply. Such a "picture frame" design, using three plies of interlayer material, may be especially useful for laminating an electrical device, the thickness of which is greater than approximately fifty microns. This is because when such a device is laminated between just two plies of interlayer material, one or more air bubbles around the periphery of the device may develop and remain in the finished laminated product. Air bubbles are unsightly and may, more importantly, cause problems as they migrate into the surrounding interlayer material, possibly leading to de-lamination of the glazing. The "picture frame" design provides a way of minimising such bubble problems; its construction is such that the third ply of interlayer material, which may be approximately the same thickness as the electrical device, is cut such that the device is effectively framed once positioned in the cut-out. The electrical device and its surrounding interlayer "frame", interleaved between the first and second plies of interlayer material, may then be laminated between the two panes of glazing material in known manner. The first, second and third plies of interlayer material are polyvinyl butyral.

To achieve a body-tinted vehicle glazing as discussed above, the third ply of interlayer material may be body-tinted. This may be in addition to, or as an alternative to, one or both of the first and second plies of interlayer material being body-tinted.

The infrared radiation reflecting means provided within the laminate is an infrared reflective film provided on a surface of a ply of interlayer material. This may be one of the three plies of interlayer described above, or a further ply of interlayer material (such as a ply of polyethylene terephthalate ("PET")) specifically provided as a substrate for the film.

Preferably the infrared reflective film includes one or more metallic layers (or metal oxide layers) and one or more dielectric layers, typically forming a multilayer stack. The multilayer stack structure may be repeated to enhance the reflectivity of the film. Amongst other similar metals, silver, gold, copper, nickel and chromium may be used as the metallic layer in a multilayer stack; indium oxide, antimony oxide or the like may be used as the metal oxide layer. Films comprising one or two layers of silver interleaved between layers of a dielectric such as an oxide of silicon, aluminium, titanium, vanadium, tin or zinc are typical multilayer stacks. Generally the one or more layers from which the infrared reflective film is formed are of the order of tens of nanometres in thickness.

As an alternative to the (metal/dielectric)ₙ based film described above, the film may include a plurality of non-metallic layers, such that it functions as a band filter (the band being focussed on the near infrared region of the electromagnetic spectrum).

When in use as an automotive window, the laminated glazing of the invention may be described as comprising an outer pane of glazing material and an inner pane of glazing material, in which case the infrared radiation reflecting means may be provided between the outer pane of glazing material and the electrical device, thereby reducing the amount of infrared radiation that may otherwise be incident upon the electrical device. For the avoidance of doubt, the terms "outer" and "inner" refer to the orientation of the glazing when installed as a window in a vehicle.

At least one of the panes of glazing material may be a pane of glass. The inner pane of glazing material may be body-tinted glass, the composition of which may include one or more of the following colourants: iron oxide, cobalt oxide, selenium, chromium oxide, titanium oxide, manganese oxide, copper oxide, vanadium oxide, nickel oxide. The degree of tint may be used to regulate the amount of visible light transmitted by the glazing into a vehicle into which it may be installed. Both panes of glazing material may be panes of glass, and if the inner pane is body-tinted, the outer pane may be clear. It is also possible that both panes may be clear glass. One or both panes may be toughened glass. Rather than being a pane of glass, a pane of glazing material may be made from a plastics material, for example polycarbonate. The panes of glazing material may be flat or they may be curved. Each pane may be between 0.5 and 25 mm in thickness, preferably between 1 and 5 mm. The overall thickness of the glazing may therefore be between 1.5 and 100 mm, preferably between 2 and 50 mm, and further preferably between 2.5 and 20 mm.

Preferably the glazing has a visible light transmission (measured with CIE Illuminant A) of greater than 70 % and further preferably greater than 75 % when both the panes of glazing material and the plies of interlayer material are substantially clear. If the glazing overall has a tint (because either the inner pane of glazing material is body-tinted or one or more plies of the interlayer material is tinted), it preferably has a visible light transmission (measured with CIE Illuminant A) of less than 40 %, further preferably less than 30 % and most preferably less than 25 %, and a total energy transmission (Parry Moon; Air Mass 1.5) of less than 30 %, further preferably less than 25 % and most preferably less than 20 %. The glazing may have these properties regardless of its laminar composition.

A laminated glazing according to the invention may be fitted into any window in the bodywork of a vehicle. It may be especially used as an automotive roof window. Furthermore a laminated glazing according to the invention may be provided with additional functionality, by inclusion of appropriate elements such as a hydrophilic or hydrophobic coating on surface 1 or surface 4 (thereby providing self-cleaning and air-deodorising functions respectively).

For a better understanding, the present invention will now be more particularly described by way of non-limiting examples with reference to, and as shown in, the accompanying drawings wherein:
Figure 1 is a perspective view of a laminated glazing in accordance with the concept of the invention;
Figure 2 is a cross section viewed along line A-A of Figure 1; and
Figure 3 is a cross section viewed along line A-A of an alternative construction of the glazing in Figure 1.

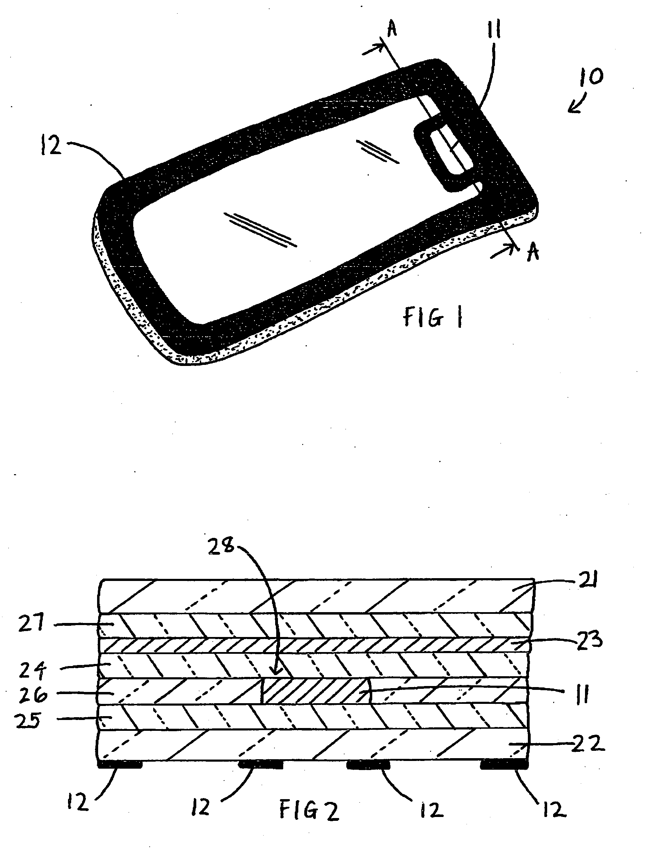

Figure 1 shows a laminated glazing, in the form of a roof window 10, comprising an electrical device in the form of an electroluminescent lamp 11 mounted within the laminate construction. Electroluminescent lamp 11 is shown as being positioned close to one edge of window 10, however it could be positioned anywhere within the window, for example in the centre. Additionally, two or more such electroluminescent lamps 11 may be provided. Around the periphery of roof window 10 there is an obscuration band 12, which is there to disguise and protect the sealant (not shown) that is used to fix the window into a vehicle (not shown), and also to hide the electrical connections (busbars, etc.) that provide electrical power to lamp 11. Obscuration band 12 is made from opaque ink that has been screen printed onto the glazing and subsequently fired. However, it may be composed of and applied using any other known means, or it need not be there at all.

Figure 2 provides more detail about the construction of roof window 10 in that it comprises outer pane of glazing material, in the form of a pane of soda lime silica glass 21, inner pane of glazing material, also in the form of a pane of soda lime silica glass 22, infrared radiation reflecting means, in the form of an infrared reflective film 23, first, second and third plies of interlayer material, in the form of plies of polyvinyl butyral ("PVB") 24, 25, 26 respectively, and further ply of interlayer material, also in the form of a ply of PVB 27, all of which join the plies of the laminate together. Third ply of PVB 26 is provided with cut-out 28 to accommodate electroluminescent lamp 11, and is body-tinted to regulate the overall visible light transmittance of the glazing. Together first, second and third plies of PVB 24, 25, 26 make up the "picture frame" construction discussed earlier. Further ply of PVB 27 is preferred to ensure adequate adhesion between infrared reflective film 23 and outer pane of glass 21.

Electroluminescent lamps 11 suitable for inclusion in a vehicle laminate and for interior lighting applications are currently available from Rogers Corporation, Durel Division, 2225 West Chandler Boulevard, Chandler, Arizona 85224, US (www.rogerscorporation.com). Infrared reflective film 23 may be comprised of multiple alternate layer of silver and indium oxide. Plies of PET carrying such a stack are currently available from Southwall Technologies Inc., 3975 East Bayshore Road, Palo Alto, California 94303, US (www.southwall.com). Alternatively, infrared reflective film 23 may be a clear, non-metallic, multi-layered film - such films are currently available from 3M United Kingdom plc, 3M Centre, Cain Road, Bracknell, Berkshire RG12 8HT, United Kingdom (www.3m.com).

A pane of soda lime silica glass may be clear glass and have a composition in the range (by weight): SiO₂ 68 - 75 %; Al₂O₃ 0 - 5 %; Na₂O 10 - 18 %; K₂O 0 - 5 %; MgO 0 - 10 %; CaO 5 - 15 %; SO₃ 0 - 2 %. The glass may also contain other additives, for example, refining aids, which would normally be present in an amount of up to 2 %.

Inner pane of glass 22 may be tinted glass having, for example, one of the following compositions:

### Composition 1

Base glass (by weight): 72.1 % SiO₂, 1.1 % Al₂O₃, 13.5 % Na₂O, 0.6 % K₂O, 8.5 % CaO, 3.9% MgO and 0.2 % SO₃, and a colourant portion (by weight): 1.45 % total iron (calculated as Fe₂O₃), 0.30 % ferrous oxide (calculated as FeO), 230 ppm Co₃O₄, 210 ppm NiO and 19 ppm Se. Such a glass is currently available as GALAXSEE™ from Pilkington Group Limited in the United Kingdom;

### Composition 2

Same base glass as composition 1 described above, and a colourant portion (by weight): 1.57 % total iron (calculated as Fe₂O₃), 0.31 % ferrous oxide (calculated as FeO), 115 ppm Co₃O₄, 0 ppm NiO and 5 ppm Se. Such a glass is currently available as SUNDYM™, again from Pilkington Group Limited in the United Kingdom.

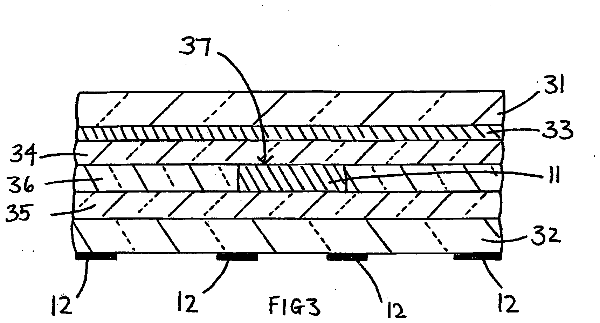

The glazing shown in Figure 3 is similar to that shown in Figure 2 in that it comprises outer pane of glass 31, inner pane of glass 32, infrared reflective film 33 and first, second and third plies of PVB 34, 35, 36 respectively. Third ply of PVB 36 is provided with cut-out 37 to accommodate electroluminescent lamp 11. The description of the glazing shown in Figure 2 generally applies to that shown in Figure 3, except in Figure 3 infrared reflective film 33 is provided on surface 2 of window 10 (i.e. on the inner surface of outer pane 31) and may comprise one or more of the following layers (in addition to at least one silver layer): TiO₂, In₂O₃, Si₃N₄, NiCr, AlN, ZnO, SnO₂, Zn*ₓ*SnO*_{y}*.

## Claims

1. A laminated glazing for use as an automotive window comprising two panes of glazing material joined together by at least three (first, second and third) plies of interlayer material, and
an electrical device located between the panes of glazing material, and
an infrared radiation reflecting means provided between the panes of glazing material for reducing the amount of infrared radiation that may otherwise be incident upon the electrical device,
wherein the electrical device is a suspended particle device, the infrared radiation reflecting means is an infrared reflective film provided on a surface of a ply of interlayer material, and the electrical device is located in a cut-out region in the third ply of interlayer material, which is located between the first and second plies of interlayer material, further wherein the first, second and third plies of interlayer material are polyvinyl butyral.

2. A laminated glazing as claimed in claim 1 wherein a ply of interlayer material is body-tinted.

3. A laminated glazing as claimed in claim 2 wherein the third ply of interlayer material is body-tinted.

4. A laminated glazing as claimed in any preceding claim wherein the infrared reflective film includes one or more metallic layers and one or more dielectric layers.

5. A laminated glazing as claimed in any of claims 1 to 3 wherein the infrared reflective film includes a plurality of non-metallic layers.

6. A laminated glazing as claimed in any preceding claim wherein, when in use as an automotive window such that it comprises an outer pane of glazing material and an inner pane of glazing material, the infrared radiation reflecting means is provided between the outer pane of glazing material and the electrical device.

7. A laminated glazing as claimed in any preceding claim wherein at least one of the panes of glazing material is a pane of glass.

8. A laminated glazing as claimed in claim 7 wherein the pane of glass is body-tinted.

9. A laminated glazing as claimed in any preceding claim wherein at least one of the panes of glazing material is a pane of a plastics material.

10. Use of a laminated glazing as claimed in any preceding claim as an automotive roof window.

## Patentansprüche

1. Mehrschicht-Verglasung zur Verwendung als Fahrzeugscheibe, die aufweist
zwei Scheiben aus Verglasungsmaterial, die durch mindestens drei (eine erste, eine zweite und eine dritte) Lagen von Zwischenschichtmaterial miteinander verbunden sind,
eine elektrische Einrichtung, die zwischen den Scheiben aus Verglasungsmaterial angeordnet ist, und
Infrarotstrahlung reflektierende Mittel, die zwischen den Scheiben aus Verglasungsmaterial vorgesehen sind, um die Menge an Infrarotstrahlung zu reduzieren, die sonst auf die elektrische Einrichtung fallen könnte,
wobei
die elektrische Einrichtung eine Vorrichtung mit suspendierten Teilchen ist,
das Infrarotstrahlung reflektierende Mittel eine Infrarot reflektierende Schicht ist, die auf einer Oberfläche einer Lage des Zwischenschichtmaterials vorgesehen ist, und
die elektrische Einrichtung in einem Aussparungsbereich in der dritten Lage des Zwischenschichtmaterials angeordnet ist, die zwischen der ersten und der zweiten Lage des Zwischenschichtmaterials angeordnet ist, wobei ferner die erste, die zweite und die dritte Lage des Zwischenschichtmaterials Polyvinylbutyral sind.

2. Mehrschicht-Verglasung nach Anspruch 1, bei der eine Lage des Zwischenschichtmaterials in der Masse getönt ist.

3. Mehrschicht-Verglasung nach Anspruch 2, bei der die dritte Lage des Zwischenmaterials in der Masse getönt ist.

4. Mehrschicht-Verglasung nach einem der vorhergehenden Ansprüche, bei der die Infrarot reflektierende Schicht eine oder mehrere Metallschichten und eine oder mehrere dielektrische Schichten aufweist.

5. Mehrschicht-Verglasung nach einem der Ansprüche 1 bis 3, bei der die Infrarot reflektierende Schicht mehrere nichtmetallische Schichten umfasst.

6. Mehrschicht-Verglasung nach einem der vorhergehenden Ansprüche, die bei Verwendung als Kraftfahrzeugscheibe eine äußere Scheibe aus Verglasungsmaterial und eine innere Scheibe aus Verglasungsmaterial aufweist, wobei die Infrarotstrahlung reflektierenden Mittel zwischen der äußeren Scheibe aus Verglasungsmaterial und der elektrischen Einrichtung vorgesehen sind.

7. Mehrschicht-Verglasung nach einem der vorhergehenden Ansprüche, bei der mindestens eine der Scheiben aus Verglasungsmaterial eine Glasscheibe ist.

8. Mehrschicht-Verglasung nach Anspruch 7, bei der die Glasscheibe in der Masse getönt ist.

9. Mehrschicht-Verglasung nach einem der vorhergehenden Ansprüche, bei der mindestens eine der Glasscheiben aus Verglasungsmaterial eine Scheibe aus einem Kunststoff ist.

10. Verwendung einer Mehrschicht-Verglasung nach einem der vorhergehenden Ansprüche als Kraftfahrzeug-Dachfenster.

## Revendications

1. Vitrage feuilleté destiné à une utilisation en tant que glace de portière d'automobile, comprenant :
deux vitres de matériau de vitrage réunies par au moins trois (première, deuxième et troisième) couches de matériau intercalaire, et
un dispositif électrique situé entre les vitres de matériau de vitrage, et
un moyen de réflexion de rayonnement infrarouge disposé entre les vitres de matériau de vitrage pour réduire la quantité de rayonnement infrarouge qui pourrait être autrement incident sur le dispositif électrique,
dans lequel le dispositif électrique est un dispositif à particules en suspension, le moyen de réflexion de rayonnement infrarouge est un film réfléchissant les infrarouges, disposé sur une surface d'une couche de matériau intercalaire, et le dispositif électrique est situé dans une région évidée dans la troisième couche de matériau intercalaire, qui est située entre les première et deuxième couches de matériau intercalaire, de plus dans lequel les deuxième et troisième couches de matériau intercalaire sont du poly(butyral de vinyle).

2. Vitrage feuilleté selon la revendication 1, dans lequel une couche de matériau intercalaire est teintée dans la masse.

3. Vitrage feuilleté selon la revendication 2, dans lequel la troisième couche de matériau intercalaire est teintée dans la masse.

4. Vitrage feuilleté selon l'une quelconque des revendications précédentes, dans lequel le film réfléchissant les infrarouges comprend une ou plusieurs couches métalliques et une ou plusieurs couches diélectriques.

5. Vitrage feuilleté selon l'une quelconque des revendications 1 à 3, dans lequel le film réfléchissant les infrarouges comprend une pluralité de couches non métalliques.

6. Vitrage feuilleté selon l'une quelconque des revendications précédentes dans lequel, lorsqu'il est utilisé en tant que glace de portière d'automobile de façon à comprendre une vitre externe de matériau de vitrage et une vitre interne de matériau de vitrage, le moyen de réflexion de rayonnement infrarouge est disposé entre la vitre externe de matériau de vitrage et le dispositif électrique.

7. Vitrage feuilleté selon l'une quelconque des revendications précédentes, dans lequel au moins l'une des vitres de matériau de vitrage est un carreau de verre.

8. Vitrage feuilleté selon la revendication 7, dans lequel le carreau de verre est teinté dans la masse.

9. Vitrage feuilleté selon l'une quelconque des revendications précédentes, dans lequel au moins l'une des vitres de matériau de vitrage est un carreau de matière plastique.

10. Utilisation d'un vitrage feuilleté selon l'une quelconque des revendications précédentes en tant que glace de toit d'automobile.
